# EUROPEAN PATENT APPLICATION

(11) **EP 4 768 294 A1**
(43) Date of publication of application: **01.07.2026**
(21) Application number: 24223587.7
(22) Date of filing: 29.12.2024
(51) Int. Cl.: B60K 17/16, F16H 48/10, F16H 57/08, F16C 27/04, F16C 27/08

(54) **PLANETARY GEAR ARRANGEMENT FOR A DISTRIBUTION GEARING**

(71) Applicant: ZF Friedrichshafen AG, 88046 Friedrichshafen (DE)
(72) Inventor: Sun, Jiabin, Shanghai, 201615 (CN); Li, Tingting, Shanghai, 201615 (CN); Fan, Zhenhua, Shanghai, 201615 (CN); Fei, Ningzhong, Shanghai, 201615 (CN)
(74) Representative: WBH Wachenhausen Patentanwälte PartG mbB

(57) **Abstract**

The present disclosure relates to a planetary gear arrangement (40) for a distribution gearing (2), comprising a first structure (75), a planet gear (74) rotatable about an axis of rotation relative to the first structure (75) and a first thrust bearing (20). The first thrust bearing (20) has a first bearing element (22) and a second bearing element (28) rotatable relative to the first bearing element (22). The first thrust bearing (20) is arranged between the planet gear (74) and the first structure (75) in the direction of the axis of rotation. A torque may be transferred between the planet gear (74) and the first bearing element (22) of the first thrust bearing (20) and between the second bearing element (28) of the first thrust bearing (20) and the first structure (75). The present disclosure further relates to a distribution gearing (2) for a vehicle (1) comprising such a planetary gear arrangement. The present disclosure further relates to a vehicle (1) comprising at least one of such a planetary gear arrangement and such a distribution gearing (2).

## Description

### Technical field

The present disclosure refers to a planetary gear arrangement for a distribution gearing, a distribution gearing with such a gear arrangement for a vehicle, and a vehicle with such a distribution gearing.

### Prior art

It is known in the art to provide means for improving a relative rotation of a planetary gear and a carrier of a planetary gear set, for example by providing washers therebetween.

### Summary of the invention

The present disclosure relates in a first aspect to a planetary gear arrangement for a distribution gearing. The distribution gearing may be a distribution gearing for a vehicle. Examples for the vehicle may include a car, a truck, a bus and a working vehicle. Examples for the working vehicle may include a tractor, a combine harvester, a communal vehicle like a street sweeping machine, an excavator, a grader and a loader. The distribution gearing is configured to distribute a power of an input shaft between a first output shaft and a second output shaft. The vehicle may comprise a driving unit for directly or indirectly driving the input shaft. The driving unit may comprise an internal combustion engine and/or an electric motor. The driving unit may receive electric energy from an energy storage, for example a tank or a battery, and convert it to rotational mechanical energy, for example to a driving torque for the input shaft. The vehicle may comprise a shiftable transmission disposed in a torque flow between the driving unit and the distribution gearing. Each output shaft of the distribution gearing may be mechanically operatively connected to a drive element of the vehicle. If two elements are mechanically operatively connected, the elements are directly or indirectly coupled to each other so that a movement of one element causes a reaction of the other element. A mechanical operative connection can be established, for example, by frictional engagement or geometric fit. The mechanical operative connection can correspond to a meshing between corresponding gears of the two elements. Further elements, such as shafts, constant velocity joints and/or one or more gear sets, may be present between the elements. The drive element may be, for example, a wheel for contacting the ground or a drive wheel or sprocket for tracks.

The distribution gearing may comprise a planetary gear set which comprises the planetary gear arrangement. The distribution gearing may comprise a housing accommodating the planetary gear set. The distribution gearing may be configured for converting an input value into an output value. For example, the distribution gearing may be able to convert an input rotational speed into a lower or higher output rotational speed, and an input torque into a higher or lower output torque. The distribution gearing may comprise one or more gear sets configured to convert torques and rotational speeds from one value to another. The gear set or sets may be formed as planetary gears. The housing may be provided as one or several casings for enclosing stationary and/or rotational components of the distribution gearing. The housing may also be configured as a stationary member for providing support and for receiving forces and torques. The housing may comprise several detachable housing portions, with each housing portion accommodating and supporting different components. For example, the housing may comprise a housing portion for enclosing and rotatably supporting the planetary gear set. For example, the housing may comprise a separate housing portion for enclosing and rotatably supporting the driving unit. The two exemplary housing portions may be mounted to each other.

The planetary gear arrangement comprises a first structure, a planet gear rotatable about an axis of rotation relative to the first structure, and a first thrust bearing with a first bearing element and a second bearing element rotatable relative to the first bearing element. The first thrust bearing is arranged between the planet gear and the first structure in the direction of the axis of rotation. The planet gear may be a gear of a planetary gear set. The thrust bearing and the planet gear may comprise a common rotational axis. The thrust bearing may comprise a bearing configured to transmit an axial force, for example a rolling-element bearing configured to transmit an axial force. An axial force may be a force substantially parallel to the axis of rotation of the thrust bearing and additionally or alternatively of the planet gear. The thrust bearing may be configured to transmit an axial force between the planet gear and the first structure. A rolling-element bearing may be a bearing comprising rolling elements, such as bearing balls, rollers or needles configured to enable a relative rotation of the first bearing element with respect to the second bearing element. The first and the second bearing elements of the thrust bearing may comprise rings. The first and the second bearing elements may be arranged concentrically to each other. The first and additionally or alternatively the second bearing elements may comprise grooves for guiding rolling elements, which may be referred to as races. The first and additionally or alternatively the second bearing elements may comprise flat surfaces for the rolling elements to roll on. The first structure may comprise a planet carrier of the planetary gearset. The first structure may additionally or alternatively comprise a housing, a wall, or another structure with respect to which the planet gear may rotate. The first structure may comprise a side that is arranged parallel to a side of the planet gear.

A torque may be transferred between the planet gear and the first bearing element of the first thrust bearing and between the second bearing element of the first thrust bearing and the first structure. The planet gear may be non-rotatably connected with the first bearing element of the first thrust bearing and the first structure may be non-rotatably connected with the second bearing element of the first thrust bearing to transmit a torque. The first bearing element may be connected with the planet gear via an interference fit. For example, the first bearing element may comprise a lip configured to engage a central projection of the planet gear in an interference fit, which may span the circumference of the first bearing element. The first bearing element may additionally or alternatively be non-rotatably connected with the planet gear via fasteners such as screws, rivets, glue, epoxy, magnets and additionally or alternatively other means. The first bearing element may be directly connected, that is, directly in contact with, the planet gear. The first bearing element may be indirectly connected to the planet gear, for example via a further structure. The first bearing element may be guided by the planetary gear via a clearance fit. A torque may additionally or alternatively be transferred between the planet gear and the first bearing element via friction. For example, the planet gear may be pushed into contact with a surface of the first bearing element, which may be moved thereby and rotate with the planet gear. The second bearing element may be connected to the first structure to transmit a torque, for example directly connected via an interference fit. The second bearing element may be indirectly connected with the first structure, for example via a pin that is non-rotatably connected with the first structure. The second bearing element may be guided on the pin via a clearance fit. The pin may be a pin carrying the planet gear. The second bearing element may additionally or alternatively be non-rotatably connected via fasteners such as screws, rivets, glue, epoxy, magnets and additionally or alternatively other means. A torque may additionally or alternatively be transferred between the second bearing element and the first structure via friction.

The thrust bearing may reduce friction and additionally or alternatively wear between the planet gear and the first structure. For example, it may reduce these between the planet gear and a planet carrier. By reducing friction, an efficiency of the planetary gear arrangement may be improved, and a noise and heat production be reduced. By reducing wear, a service life of the planetary gear arrangement may be improved and a high precision and efficiency maintained over time.

In an embodiment, the planetary gear arrangement comprises a second structure arranged on a side of the planet gear opposite to the first structure and a second thrust bearing with a first bearing element and a second bearing element rotatable relative to the first bearing element. The planet gear is rotatable about the axis of rotation relative to the second structure. The second thrust bearing is arranged between the planet gear and the second structure in the direction of the axis of rotation. A torque may be transferred between the planet gear and the first bearing element of the second thrust bearing and between the second bearing element of the second thrust bearing and the second structure. The second structure is arranged on a side of the gear opposite to the first structure. The second structure may comprise a planet carrier of the planetary gearset. The second structure may additionally or alternatively comprise a housing, a wall, or another structure that is rotatable relative to the planet gear. The second structure may comprise a side that is arranged parallel to a side of the planet gear and additionally or alternatively of the first structure. The first and the second structure may be non-rotatably connected. The connection of the second thrust bearing with the planet gear and the second structure may be analogous to the connection of the first thrust bearing with the planet gear and the first structure. The second thrust bearing may be arranged concentrically to the first thrust bearing. The second thrust bearing may be arranged mirrored to the first thrust bearing. The first bearing elements of the first and second thrust bearing may be arranged facing towards each other, with the second bearing elements facing away from each other. The second thrust bearing may be substantially identical to the first thrust bearing. Any feature described in relation to the first thrust bearing may correspond to a feature of the second thrust bearing and vice versa.

By providing a second thrust bearing attached to a second structure, a support and axial mounting of the planet gear may be further improved. For example, the first and second thrust bearings may be configured to support an axial load in either direction along the axis of rotation.

In an embodiment, the first structure and the second structure are non-rotatably connected. For example, they may be permanently non-rotatably connected. A permanent non-rotatable connection is a connection in which the two elements are rigidly coupled together. The elements may be formed as separate elements connected to each other in a non-rotatable manner or integrally. For example, they may be provided as a single element. The first and second structures may comprise or be part of the carrier of the planetary gear arrangement. By non-rotatably connecting the first and second structure, a mechanical stability, in particular an axial stability, of the planetary gear arrangement may be improved.

In an embodiment, the first thrust bearing comprises a rolling-element thrust bearing. The rolling-element thrust bearing may be a thrust ball bearing. A thrust ball bearing may be a thrust bearing in which the rolling elements are provided by balls or spheres, such as bearing balls. The second thrust bearing may also comprise a rolling-element thrust bearing. A rolling-element thrust bearing may enable a low friction rotation. A thrust ball bearing may provide a lower friction than other alternatives, such as roller bearings. This may be due to a smaller contact area between the bearing balls and the first and second bearing elements. Additionally or alternatively, it may provide a higher maximum rotational speed than other alternatives.

In an embodiment, the first thrust bearing comprises a cage guided on the second bearing element of the first thrust bearing for accommodating the rolling elements. The cage may be configured to keep the rolling elements, such as bearing balls, from slipping out of the first thrust bearing. The cage may be configured for keeping the rolling elements from collecting on one side. The cage may comprise a lip spanning its circumference configured to engage with an edge of the second bearing element for guidance. The edge may be an outer edge. The cage may be guided by a groove in the second bearing element. The cage being guided on the second bearing element may be configured to remain concentric with respect to the second bearing element. The cage may contact the second bearing element during an operation of the first thrust bearing. The cage may be configured to not contact the first bearing element during an operation of the first thrust bearing. The cage may be guided on the second bearing element via an interference fit or via a clearance fit. By providing a guiding of the cage on the second bearing element, the thrust bearing may be particularly well suited for rotating at high speed. Additionally or alternatively, a lubrication may be improved.

In an embodiment, the first thrust bearing comprises a bearing spring configured to exert a force parallel to the axis of rotation of the planet gear on one of the first bearing element and second bearing element. The bearing spring may be arranged concentric to an axis of rotation of the first thrust bearing, for example concentric to the pin. The bearing spring may be guided on the pin via an interference fit or a clearance fit. The second thrust bearing may comprise an identical bearing spring. The bearing spring may be configured to exert an axial force onto the planet gear, the first structure and additionally or alternatively the second structure. The bearing spring may be configured to exert the force directly or via other components, for example the other components of the thrust bearing. By providing a force, an axial force exerted on the planet gear may be counteracted and additionally or alternatively an axial positioning improved.

In an embodiment, the bearing spring comprises a wave spring. The wave spring may be a single turn wave spring. The wave spring may be substantially smaller in an axial direction than in a radial direction. An axial spring may be substantially more compact in an axial direction than a comparable coil spring. For example, it may be at least 50% more compact in an axial direction and thereby enable a particularly compact system.

In an embodiment, the bearing spring is arranged between the second bearing element of the first thrust bearing and the first structure. The bearing spring may be configured to support the thrust bearing against the first structure and thus support the planet gear against the first structure. The bearing spring may be configured to transmit an axial force between the first structure and the planet gear. The second bearing element of the first thrust bearing and the first structure may be non-rotatably connected, for example via the bearing spring. By providing for the second bearing element and the first structure to not rotate relative to each other, the bearing spring may not be subject to excessive wear due to being in contact with rotating components.

In an embodiment, the planetary gear arrangement has no axial clearances between the planet gear, the first thrust bearing and the first structure. An axial clearance may be a space along an axial direction. An axial clearance may comprise a space along which the thrust bearing and additionally or alternatively the gear may slide. The width of the thrust bearing, including the bearing spring, the planet gear, and additionally or alternatively other components may be chosen such as to not provide any axial clearance. Tolerances may be adjusted for by a compression of the bearing spring. By providing a planetary gear arrangement with no axial clearances as described, a more rigid and additionally or alternatively efficient structure may be provided.

In an embodiment, the planetary gear arrangement is configured such that the bearing spring is preloaded. To be preloaded may comprise being compressed. The bearing spring may be configured to exert an axial force when preloaded. If the planetary gear arrangement comprises two thrust bearings with two preloaded bearing springs, these may exert a force onto the planet gear from both directions. The bearing springs may counteract an axial force exerted onto the planet gear. The bearing springs may be configured to prevent an axial movement when the axial force is lower than the force exerted by the preloaded bearing springs. By providing a thrust bearing with a preloaded bearing spring, the axial stiffness of the planetary gear arrangement may be improved. By providing a planetary gear arrangement with two such thrust bearings with preloaded bearing springs, an axial stiffness may be improved even further.

In an embodiment, the first structure constitutes a planet carrier. The planet carrier may comprise the second structure. The planet carrier may be configured to carry a plurality of planetary gears, for example two, three, four, five or more. The planet carrier may be formed by a single forged or cast metal piece. The planet carrier may be formed by multiple pieces. Pins may be arranged on the planet carrier for mounting of the planetary gears. The pins may be formed as part of the planet carrier, for example the pin may be formed integrally with a part of the planet carrier.

In a second aspect, the present disclosure relates to a distribution gearing for a vehicle comprising a planetary gear arrangement according to the first aspect. The distribution gearing is configured to distribute a power of an input shaft between a first output shaft and a second output shaft. The respective advantages and further features can be taken from the description of the first aspect, wherein embodiments of the first aspect also form embodiments of the second aspect and vice versa.

In an embodiment, the distribution gearing comprises a first planetary gear set and a second planetary gear set. The first planetary gear set may comprise at least a first element, a second element and a third element. The second planetary gear set may comprise at least a first element, a second element and a third element. An input shaft may be non-rotatably connected to the first element of the first planetary gear set. The second element of the first planetary gear set may be non-rotatably connected to a first output shaft. The third element of the first planetary gear set may be non-rotatably connected to the first element of the second planetary gear set. The second element of the second planetary gear set may be non-rotatably connected to a stationary member, such as a housing. The third element of the second planetary gear set may be non-rotatably connected to a second output shaft. The first and additionally or alternatively the second planetary gear sets may comprise the planetary gear arrangement of the first aspect. For example, the planet gears of the first and additionally or alternatively the second planetary gear sets may comprise a planetary gear arrangement according to the first aspect.

The first, second and third elements, for example, may each be a sun gear, a planetary carrier or a ring gear of the respective planetary gear set. The respective planetary gear set may be a plus or a minus planetary gear set. Each of the planetary gear sets may have planetary gears that may be rotatably mounted on the respective planetary carrier of the one planetary gear set. The planetary gears may mesh with both the sun gear and the ring gear of the respective planetary gear set. With the configuration of the gearing according to the present embodiment, a power distribution function for distributing power of the input shaft between the first output shaft and the second output shaft is provided with a simple and compact configuration. In an alternative embodiment, the second output shaft is omitted and the third element of the second planetary gear set is non-rotatably connected to the second element of the first planetary gear set instead of the second output shaft. Thereby, a distribution gearing with a particularly high transmission ratio is provided.

In an embodiment, each first element of the planetary gear sets is a sun gear, each second element of the planetary gear sets is a planetary carrier and each third element of the planetary gear sets is a ring gear. The ring gear of the first planetary gear set may be formed integrally with the sun gear of the second planetary gear set. Thereby, a distribution gearing with compact dimensions can be provided.

In a third aspect, the present disclosure relates to a vehicle comprising at least one of a planetary gear arrangement according to the first aspect and a distribution gearing according to the second aspect. The respective advantages and further features can be taken from the description of the first or second aspect, wherein embodiments of the first or second aspect also form embodiments of the third aspect and vice versa.

### Brief description of drawings

Figure 1 shows a vehicle with a distribution gearing according to an embodiment of the present disclosure.
Figure 2 schematically shows a general layout of the distribution gearing of the vehicle of Figure 1.
Figure 3 schematically shows a construction detail of the distribution gearing of Figure 2.
Figure 4 schematically shows an exploded view of one of the thrust bearings of Figure 3.

### Detailed description of embodiments

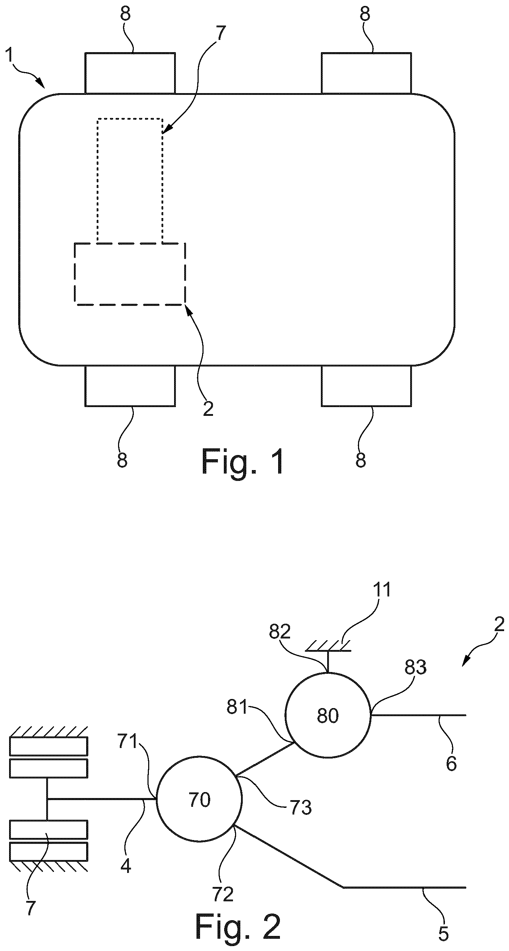

Figure 1 shows a vehicle 1 with a distribution gearing 2 according to an embodiment of the present disclosure. The distribution gearing 2 is driven by a driving unit 7 and is configured for distributing power input by the driving unit 7 to at least two drive elements 8. In the present embodiment, the driving unit 7 is an electrical motor, and the drive elements 8 are wheels of the vehicle 1.

Figure 2 schematically shows a general layout of the distribution gearing 2 according to an embodiment of the present disclosure. The distribution gearing 2 is a power distribution gearing with two planetary gear sets. As can be seen from Figure 2, the distribution gearing 2 comprises a first planetary gear set 70 having a first element 71, a second element 72 and a third element 73. Furthermore, the distribution gearing 2 comprises a second planetary gear set 80 having a first element 81, a second element 82 and a third element 83. A power of the driving unit 7 can be introduced into the distribution gearing 2 via the first element 71 of the first planetary gear set 70. For this purpose, an input shaft 4 driven by the driving unit 7 is mechanically operatively connected to the first element 71 of the planetary gear set 70, here permanently non-rotatably connected. The third element 73 of the first planetary gear set 70 is permanently non-rotatably connected to the first element 81 of the second planetary gear set 80, here by being integrally formed. The second element 82 of the second planetary gear set 80 is permanently non-rotatably fixed to a stationary member, here a housing 11. A first output shaft 5 is mechanically operatively connected to the second element 72 of the first planetary gear set 70, in this case permanently non-rotatably connected. A second output shaft 6 is mechanically operatively connected to the third element 83 of the second planetary gear set 80, in this case permanently non-rotatably connected.

Figure 2 illustrates a schematic layout of the distribution gearing 2 and does not describe the spatial layout of its components. The first element 71 of the first planetary gear set 70 comprises a sun gear, while the second element 72 comprises a planet carrier coupled with the planets of the first planetary gear set 70. The third element 73 is integrally formed with the first element 81 of the second planetary gear set 80, forming a ring-sun-gear. The second planetary gear set 80 is arranged concentrically around the first planetary gear set 70. The second element 82 forms the planet carrier and the third element 83 forms the ring gear of the second planetary gear set 80. The input shaft 4 is arranged concentrically around the first output shaft 5. The input shaft 4 and the first output shaft 5 are arranged concentrically to and on a side of the distribution gearing 2 opposite to the second output shaft 6.

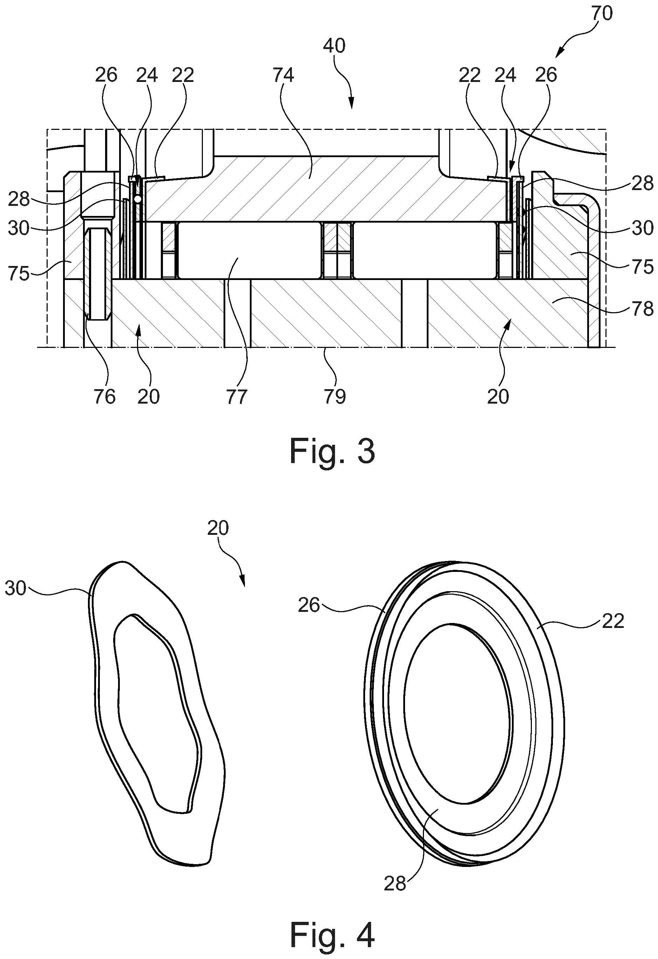

Figure 3 schematically shows a construction detail of the first planetary gear set 70 of Figure 2 with a planetary gear arrangement 40 according to the present disclosure, showing an upper half of a planet gear 74. Planet gear 74 is mounted on a pin 78 via a planetary bearing 77. Pin 78 is non-rotatably fixed to planet carrier 75 via a fixing pin 76. Planet gear 74 is free to rotate relative to the planet carrier 75 and pin 78 about an axis of rotation 79. The axis of rotation 79 coincides with a central axis of the planet gear 74 and of the pin 78. The planet carrier 75 provides the first and the second structure according to the present disclosure and corresponds to the second element 72 of the first planetary gear set 70 shown in Figure 2. A ring gear and a sun gear of the planetary gear set 70 mesh with the planet gear 74 and are not shown.

The planet gear 74 is axially supported against the planet carrier 75 on a left and a right side by a first and a second thrust bearing 20, which are configured to enable a low-friction, low-wear rotation and to transmit axial forces parallel to the axis of rotation 79. The thrust bearings 20 are arranged concentrically to the planet gear 74 and the pin 78. The two thrust bearings 20 are thrust ball bearings. Each thrust bearing 20 comprises a first bearing element, provided by a first ring 22, bearing balls 24, a cage 26, a second bearing element provided here by a second ring 28, and a bearing spring provided by wave spring 30.

Each thrust bearing 20 is preloaded against the planetary gear 74 by the wave spring 30 which is arranged between the second ring 28 of each thrust bearing 20 and the respective side of the planet carrier 75. The wave springs 30 thus exert an axial force on the planet gear 74, thereby improving an axial stiffness of the planetary gear arrangement 40. They also function to remove any axial clearance between the planet gear 74 and the planet carrier 75, preventing any axial space or gap therebetween. The planet gear 74 will only move axially if an axial force exerted on it exceeds the preload force exerted by the wave springs 30.

The second rings 28 of the first and second thrust bearing 20 and the wave springs 30 are guided on the pin 78 via a clearance fit. The wave springs 30 are configured to transmit a force between the second rings 28 and the planet carrier 75, thereby providing a non-rotatable connection between them. The first rings 22 are non-rotatably mounted on the planet gear 74 via an interference fit. The first rings 22 comprise a lip pressed onto the planet gear 74. The first rings 22 may also be mounted via alternative means such as fasteners not shown here. The bearing balls 24 are arranged between the respective first rings 22 and second rings 28 of the thrust bearings 20. The bearing balls 24 are configured to directly contact the first ring 22 and the second ring 28 and enable a low-friction relative rotation between them, and thus enable a low-friction relative rotation between the planet gear 74 and the planet carrier 75.

The bearing balls 24 are held in position by a cage 26, which prevents them from slipping out of the thrust bearing 20 and keeps them distributed about the thrust bearing 20 in an even manner. The cage 26 is guided on the second ring 28 of the respective thrust bearing 20 via a clearance fit, thus keeping it and the bearing balls 24 in alignment. The cage 26 is guided on the second ring 28 via a lip arranged along the circumference of the second ring 28. The cage 26 may additionally or alternatively be guided by different means, such as an interference fit. During an operation of the planetary gear set 70, the cage 26 may contact the second ring 28 and not contact the first ring 22.

Figure 4 schematically shows an exploded view of one of the thrust bearings 20 of Figure 3. The wave spring 30 is shown separate and to the left of the rest of the other components of the thrust bearing 20. The wave spring 30 is a single turn wave spring. On the right, the first ring 22 and the second ring 28 are shown arranged concentrically next to each other, with the first ring 22 visible in front and the second ring 28 visible through the central opening of the first ring 22. The cage 26 is arranged between them and is shown spanning a circumference of the second ring 28 with the lip guiding it along said second ring 28. The bearing balls 24 are not shown in Figure 4.

### Reference signs

- 1: vehicle
- 2: distribution gearing
- 4: input shaft
- 5, 6: output shaft
- 7: driving unit
- 8: drive element
- 11: housing
- 20: thrust bearing
- 22: first ring
- 24: bearing ball
- 26: cage
- 28: second ring
- 30: wave spring
- 40: planetary gear arrangement
- 70: first planetary gear set
- 71: first element
- 72: second element
- 73: third element
- 74: planetary gear
- 75: planet carrier
- 76: fixing pin
- 77: planetary bearing
- 78: pin
- 79: axis of rotation
- 80: second planetary gear set
- 81: first element
- 82: second element
- 83: third element

## Claims

1. A planetary gear arrangement (40) for a distribution gearing (2), comprising a first structure (75), a planet gear (74) rotatable about an axis of rotation relative to the first structure (75), and a first thrust bearing (20) with a first bearing element (22) and a second bearing element (28) rotatable relative to the first bearing element (22), wherein the first thrust bearing (20) is arranged between the planet gear (74) and the first structure (75) in the direction of the axis of rotation, and wherein a torque may be transferred between the planet gear (74) and the first bearing element (22) of the first thrust bearing (20) and between the second bearing element (28) of the first thrust bearing (20) and the first structure (75).

2. The planetary gear arrangement (40) according to claim 1, **characterized in that** the planetary gear arrangement (40) comprises a second structure (75) arranged on a side of the planet gear (74) opposite to the first structure (75), and a second thrust bearing (20) with a first bearing element (22) and a second bearing element (28) rotatable relative to the first bearing element (22), wherein the planet gear (74) is rotatable about the axis of rotation relative to the second structure (75), the second thrust bearing (20) is arranged between the planet gear (74) and the second structure (75) in the direction of the axis of rotation, and wherein a torque may be transferred between the planet gear (74) and the first bearing element (22) of the second thrust bearing (20) and between the second bearing element (28) of the second thrust bearing (20) and the second structure (75).

3. The planetary gear arrangement (40) according to claim 2, **characterized in that** the first structure (75) and the second structure (75) are non-rotatably connected.

4. The planetary gear arrangement (40) according to one of the preceding claims, **characterized in that** the first thrust bearing (20) comprises a rolling-element thrust bearing (20).

5. The planetary gear arrangement (40) according to claim 4, **characterized in that** the first thrust bearing (20) comprises a cage (26) guided on the second bearing element (28) of the first thrust bearing (20) for accommodating rolling elements of the rolling-element thrust bearing (20).

6. The planetary gear arrangement (40) according to one of the preceding claims, **characterized in that** the first thrust bearing (20) comprises a bearing spring (30) configured to exert a force parallel to the axis of rotation (79) of the planet gear (74) on one of the first bearing element (22) and second bearing element (28).

7. The planetary gear arrangement (40) according to claim 6, **characterized in that** the bearing spring (30) comprises a wave spring (30).

8. The planetary gear arrangement (40) according to claim 6 or 7, **characterized in that** the bearing spring (30) is arranged between the second bearing element (28) of the first thrust bearing (20) and the first structure (75).

9. The planetary gear arrangement (40) according to one of the claims 6-8, **characterized in that** the planetary gear arrangement (40) has no axial clearances between the planet gear (74), the first thrust bearing (20) and the first structure (75).

10. The planetary gear arrangement (40) according to one of the claims 6-9, **characterized in that** the planetary gear arrangement (40) is configured such that the bearing spring (30) is preloaded.

11. The planetary gear arrangement (40) according to one of the preceding claims, **characterized in that** the first structure (75) constitutes a planet carrier (75).

12. A distribution gearing (2) for a vehicle (1) comprising a planetary gear arrangement (40) according to one of the preceding claims, the distribution gearing (2) being configured to distribute a power of an input shaft (4) between a first output shaft (5) and a second output shaft (6).

13. The distribution gearing (2) according to claim 12, **characterized in that** the distribution gearing (2) comprises a first planetary gear set (70) and a second planetary gear set (80), wherein the first planetary gear set (70) comprises at least a first element (71), a second element (72) and a third element (73) and the second planetary gear set (80) comprises at least a first element (81), a second element (82) and a third element (83), wherein the input shaft (4) is non-rotatably connected to the first element (71) of the first planetary gear set (70), the second element (72) of the first planetary gear set (70) is non-rotatably connected to the first output shaft (5), the third element (73) of the first planetary gear set (70) is non-rotatably connected to the first element (81) of the second planetary gear set (80), the second element (82) of the second planetary gear set (80) is non-rotatably connected to a stationary member (11), the third element (83) of the second planetary gear set (80) is non-rotatably connected to the second output shaft (6) and at least one of the first planetary gear set (70) and the second planetary gear set (80) comprise the planetary gear arrangement (40).

14. The distribution gearing (2) according to claim 13, **characterized in that** each first element (71, 81) of the planetary gear sets (70, 80) is a sun gear, each second element (72, 82) of the planetary gear sets (70, 80) is a planetary carrier and each third element (73, 83) of the planetary gear sets (70, 80) is a ring gear.

15. A vehicle (1) comprising at least one of a planetary gear arrangement according to one of the claims 1 to 11 and a distribution gearing (2) according to one of the claims 12 to 14.
